Europäisches Patentamt

(19) European Patent Office

Office européen des brevets

(11) Numéro de publication: **0 046 435**
**B1**

(12) **FASCICULE DE BREVET EUROPEEN**

(45) Date de publication du fascicule du brevet:
12.09.84

(21) Numéro de dépôt: **81401301.7**

(22) Date de dépôt: **13.08.81**

(51) Int. Cl.³: **H 02 P 1/18, H 02 P 7/00,
H 02 P 5/16, B 60 L 11/18**

(54) Dispositif de démarrage et de contrôle de la vitesse d'un moteur électrique.

(30) Priorité: **18.08.80 FR 8018032**

(43) Date de publication de la demande:
**24.02.82 Bulletin 82/8**

(45) Mention de la délivrance du brevet:
**12.09.84 Bulletin 84/37**

(84) Etats contractants désignés:
**DE GB IT SE**

(56) Documents cités:
**FR - A - 1 532 493**
**FR - A - 2 261 897**
**GB - A - 1 074 443**
**GB - A - 1 083 982**

(73) Titulaire: **Transports Recherches Etudes Groupement
d'Intérêt Economique (T.R.E.G.I.E.), 147 avenue
Paul-Doumer, F-92500 Rueil Malmaison (FR)**

(72) Inventeur: **Fauvet, Jean-Pierre, 353, rue Marcilly,
F-45590 St Cyr en Val (FR)**

(74) Mandataire: **Colas, Jean-Pierre, Régie Nationale des
Usines RENAULT 8 et 10 Avenue Emile Zola,
F-92109 Boulogne-Billancourt (FR)**

## Description

La présente invention se rapporte à un dispositif de démarrage et de contrôle de la vitesse d'un moteur électrique à courant continu selon la préambule de la revendication 1, depuis l'arrêt jusqu'à sa vitesse maximale admissible, appliquée notamment à la traction électrique d'un véhicule automobile.

Le moteur électrique le plus utilisé jusqu'à ce jour est le moteur à courant continu à excitation série. Mais il présente l'inconvénient d'appeler un fort courant au démarrage et ne permet pas d'être contrôlé aisément en vitesse. En effet, après que la tension totale ait été appliquée aux bornes du moteur, la vitesse de celui-ci continue à croître jusqu'à ce que le couple résistant, opposé par exemple par le véhicule et son environnement, équilibre le couple moteur.

Par ailleurs, le freinage électrique demande, en général, l'inversion du couplage entre l'inducteur et l'induit et nécessite l'emploi d'un dispositif d'amorçage pour permettre le fonctionnement en génératrice série.

L'homme de métier s'est alors tourné vers le moteur à courant continu à excitation séparée (CB-A-1 074 443) qui est apprécié pour 3 raisons essentielles:

– il permet, par simple réglage du flux inducteur, d'obtenir le freinage électrique avec récupération d'énergie,

– dans la plage de vitesses où la tension totale de la source est appliquée au moteur, le moteur à excitation séparée fournit, à dimensionnement égal, une puissance supérieure à celle fournie par le moteur à excitation série,

– enfin, l'inversion du sens de la marche est réalisée par la commutation du circuit inducteur seul, donc à puissance réduite.

Dans tous les cas, cependant, les solutions exploitées actuellement sont coûteuses sur le plan de la mise en œuvre. En effet, pour assurer la phase de démarrage, où un couple moteur important est nécessaire, elles nécessitent la présence d'un variateur électronique dimensionné pour la puissance maximale (p. ex. FR-A-2 261 897) ou d'une source de courant pourvue de prises de réglage (GB-A-1 074 443), ce qui permet de contrôler le courant dans l'induit du moteur en faisant varier sa tension d'alimentation.

Mais, outre le coût de ce variateur de forte puissance, l'ondulation du courant engendrée par le variateur lors des phases de démarrage est à l'origine d'un courant efficace supérieur au courant moyen, ce qui conduit à une augmentation des pertes par effet Joule.

Pour le moteur à excitation séparée, le contrôle de sa vitesse après la phase de démarrage peut être obtenu au moyen d'un second variateur de plus faible puissance, réglant la valeur du courant inducteur.

Le but de la présente invention est d'éviter les inconvénients qui précèdent en proposant un dispositif économique de démarrage et de contrôle de la vitesse d'un moteur électrique à courant continu, entre la vitesse nulle et la vitesse maximale admissible, qui évite l'emploi d'un variateur électronique de forte puissance dans le circuit de démarrage en ne nécessitant qu'un variateur auxiliaire dans le circuit d'excitation pour le réglage de la vitesse.

Ce but est atteint par les caractérisitiques énoncées dans la partie caractérisante de la revendication 1. Le moteur démarre sous un faible couple en mode d'excitation série sans adjonction de résistance ni de variateur dans le circuit de démarrage, puis le circuit d'excitation est commuté automatiquement en mode séparé dès que la vitesse et la force contre-électromotrice du moteur atteignent des valeurs prédéterminées et le contrôle de la vitesse est ensuite obtenu de manière connue au moyen d'un variateur de faible puissance réglant la valeur du courant inducteur, donc le flux produit par celui-ci.

Plus concrètement, le dispositif comprend une source de courant continu alimentant un circuit composé de deux dérivations; une première dérivation comportant en série un premier contacteur, l'enroulement inducteur et un hacheur de courant, et une seconde dérivation comportant un second contacteur en série avec l'enroulement induit et, enfin, un élément unidirectionnel dont le sens de conduction va de la ligne reliant l'inducteur au hacheur à la ligne reliant le second contacteur à l'induit du moteur.

La fermeture du premier contacteur, par exemple à l'aide de la pédale d'accélérateur d'un véhicule, commande le démarrage du moteur en mode d'excitation série puis, dès que la vitesse signalée par un détecteur atteint une valeur suffisante, le hacheur de courant régule la vitesse du moteur dont le circuit d'excitation est commuté en mode séparé dès qu'un comparateur de tension indique que la force contre-électromotrice aux bornes de l'induit atteint la tension d'alimentation. Le second contacteur est alors fermé et l'élément unidirectionnel bloqué.

Outre la suppression du variateur dans le circuit de démarrage, l'invention présente l'avantage de pouvoir cependant contrôler la vitesse pendant et après la période de démarrage, avec les avantages du moteur à excitation séparée, c'est-à-dire essentiellement à l'aide d'un variateur dimensionné pour un faible courant d'excitation.

De plus, cette solution évite les pertes supplémentaires exposées plus haut, dues à l'ondulation du courant lors des phases de démarrage.

D'autres caractéristiques et avantages de l'invention apparaîtront dans la description suivante, en référence au dessin annexé sur lequel:

– les figures 1 à 3 illustrent schématiquement le fonctionnement du dispositif selon l'invention,

– la figure 4 représente un exemple de réalisation du dispositif,

– les courbes de la figure 5 représentent le couple moteur en fonction de la vitesse du moteur respectivement dans le cas d'un moteur à excitation série, à excitation séparée et à excitations successives selon l'invention,

– les courbes de la figure 6 représentent le couple en fonction de la vitesse d'un véhicule à traction électrique dans les trois modes d'excitation ci-dessus.

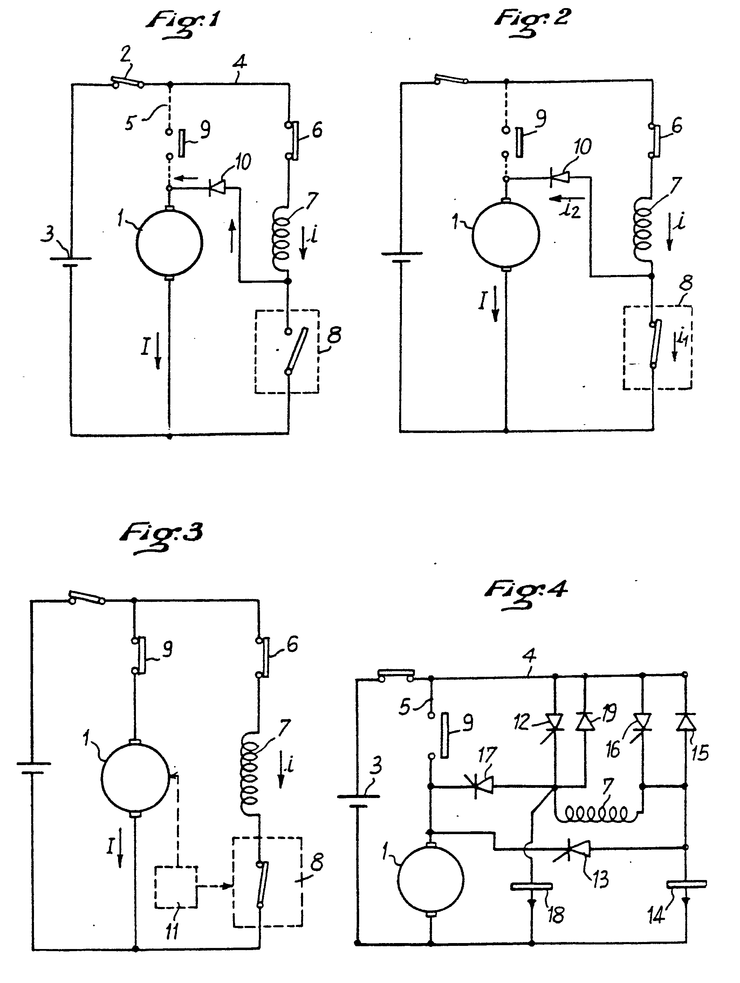

Comme on le voit sur les figures 1 à 3, le dispositif selon l'invention comprend un moteur électrique 1 à courant continu alimenté à travers un sectionneur 2 par une source de courant continu 3 constituée par exemple par la ou les batteries d'un véhicule automobile.

Le circuit est divisé en deux dérivations 4, 5 comprenant, pour la première dérivation 4, un premier contacteur 6 en série avec l'enroulement inducteur 7 du moteur et un hacheur de courant 8 schématisé par un interrupteur et, pour la deuxième dérivation 5, un second contacteur 9 en série avec l'enroulement induit du moteur 1. Par ailleurs, un élément unidirectionnel 10, représenté par une diode, est branché dans le sens de conduction directe entre les conducteurs reliant, d'une part, l'inducteur 7 au hacheur 8 et, d'autre part, le second contacteur 9 à l'induit 1.

Le contacteur 6, dimensionné pour un courant de l'ordre du dixième du courant maximal admissible dans le moteur, se ferme suite à l'ordre de démarrage donné, par exemple, par l'action sur la pédale d'accélérateur du véhicule.

Le hacheur 8 restant ouvert, le courant débité par la source circule à travers le contacteur 7, l'inducteur 7, la diode 10 et l'induit 1 du moteur qui démarre sous un faible couple créé par le courant commun inducteur-induit $I = i$.

Dès que la vitesse du moteur atteint une valeur prédéterminée, comprise par exemple entre le tiers et la moitié de sa vitesse maximale admissible, le hacheur 8 entre en fonctionnement. La vitesse du moteur peut être détectée par tout moyen connu et non représenté tel qu'une génératrice tachymétrique disposée sur l'arbre de l'induit, une lecture du courant inducteur ou tout autre moyen.

Le fonctionnement du hacheur est également connu, notamment du brevet français n° 2 298 225 déposé par le présent demandeur. Il peut être assimilé à un interrupteur que l'on ouvre et que l'on ferme successivement et dont on fait varier le temps de conduction pour moduler la valeur du courant $i_1$ qui le traverse. Plus précisément, l'on modifie le rapport cyclique du hacheur, c'est-à-dire le rapport entre le temps de conduction et la période totale d'un cycle, cette dernière étant la somme des temps de conduction et de non-conduction. La modification du rapport cyclique est obtenue à l'aide d'une tension de commande.

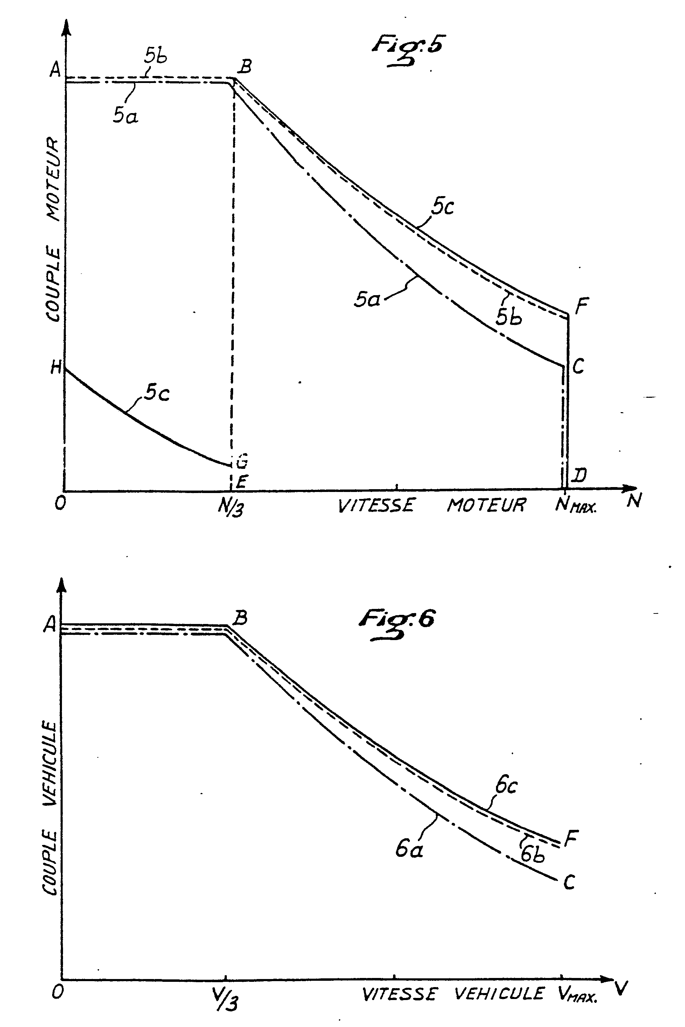

Le courant $i$ dans l'inducteur se divise entre le courant $i_1$ dans le hacheur pendant le temps de conduction et le courant $i_2$ dans la diode et l'induit du moteur lorsque le hacheur est bloqué (figure 2). Ainsi, en augmentant le rapport cyclique, on augmente le courant $i$ dans l'inducteur et donc le flux produit par cet enroulement.

La force contre-électromotrice du moteur étant proportionnelle au flux inducteur, augmente à son tour, et, lorsque celle-ci devient voisine de la tension d'alimentation, un comparateur de tensions non représenté provoque la fermeture du second contacteur 9 qui relie l'induit 1 du moteur en parallèle sur l'enroulement d'excitation 7 en entraînant le blocage de la diode 10. Le moteur fonctionne alors comme un moteur à excitation séparée (figure 3).

Lorsque le moteur fonctionne à vide ou à faible charge, le réglage du rapport cyclique fait varier le courant inducteur dans le même sens et la vitesse du moteur en sens inverse.

Le moteur étant calculé pour fonctionner dans une plage de vitesses correspondant à deux valeurs extrêmes du courant inducteur, tous les réglages sont possibles entre ces deux extrêmes:

– à l'excitation minimale correspond la vitesse maximale admissible choisie, en général limitée par la commutation électrique et la résistance mécanique de l'induit,

– à l'excitation maximale correspond la vitesse minimale admissible en général limitée par l'échauffement de l'inducteur.

Lorsque le moteur fonctionne à pleine charge, le seul réglage du courant inducteur et donc du flux peut conduire à des surintensités inadmissibles dans l'induit du moteur. Il est alors nécessaire de mesurer le courant induit par un shunt ou tout autre dispositif approprié et de prévoir une boucle d'asservissement 11 pour agir sur le hacheur. Le courant d'excitation peut alors varier entre deux valeurs extrêmes correspondant à la valeur maximale admissible du courant induit, selon le fonctionnement en moteur ou en générateur, et est limité par la boucle d'asservissement 11 qui modifie le rapport cyclique du hacheur en fonction de la valeur mesurée du courant induit par rapport à une valeur de consigne.

En moteur, un ordre d'accélération se traduit par une désexcitation du circuit inducteur, tandis qu'en générateur un ordre de décélération se traduit par une surexcitation du circuit inducteur. Dans les deux cas, l'augmentation du courant induit qui en résulte cesse dès que la valeur maximale est atteinte.

Le circuit de la figure 4 illustre un exemple de réalisation du dispositif permettant le fonctionnement du moteur dans les deux sens de rotation, ce qui correspond aux marches avant et arrière d'un véhicule à traction électrique.

En marche avant, on amorce les thyristors 12, 13 qui jouent respectivement les rôles du contacteur 6 et de la diode 10 dans les figures précédentes et le moteur 1 démarre en mode série. Puis, à la vitesse choisie, on fait conduire le transistor 14 qui autorise ensuite la fermeture du contacteur 9 en vue du contrôle de la vitesse en mode d'excitation séparée.

Après la fermeture du contacteur 9 et lorsque le transistor 14 est bloqué, le courant circule dans la diode 15 provoquant le désamorçage du thyristor 13.

En marche arrière, on amorce les thyristors 16, 17 et le moteur démarre en mode série. Puis, à la vitesse choisie, on fait conduire le transistor 18 qui permet la fermeture du contacteur 9. Le processus est alors le même que pour la description précédente.

Cette fois, c'est le blocage du transistor 18 qui provoque le désamorçage du thyristor 17 en faisant circuler le courant dans le diode 19. L'annulation de la commande marche AV ou marche AR provoque les désamorçages respectifs des thyristors 12 et 16, c'est-à-dire l'ouverture des contacteurs fictifs correspondant à 6.

Il reste bien entendu que les thyristors peuvent être remplacés par des transistors et inversement ou par tout autre composant équivalent à la portée de l'homme de métier.

Le dispositif, selon l'invention, est particulièrement adapté pour les applications qui demandent un faible couple aux basses vitesses du moteur comme c'est le cas, par exemple, pour une pompe centrifuge ou un ventilateur pour lesquels le couple résistant augmente avec la vitesse, ou encore pour des machins équipées d'un convertisseur de couple.

Une application préférée consiste à utiliser le dispositif pour la traction électrique des véhicules automobiles en conservant l'embrayage et la boîte de vitesses mécaniques.

Cette association procure les avantages suivants:
— un meilleur rendement de la chaîne électrique,
— une plus grande longévité des batteries,
— une chaîne électrique peu coûteuse,
— une plus grande liberté dans les performances du véhicule.

Avec le dispositif selon l'invention, le moteur démarre en mode d'excitation série. Comme on le sait, le couple au démarrage varie en raison inverse du carré de la résistance de l'enroulement inducteur. Il n'est donc pas souhaitable que le couple au démarrage soit trop élevé car cela conduirait à une dimensionnement et à un coûte de l'enroulement (poids de cuivre) tels que le dispositif perdrait son avantage financier, comparé au coût des solutions antérieures utilisant un ou deux variateurs électroniques dont un de forte puissance.

L'association d'un moteur électrique à faible couple de démarrage avec un embrayage classique tel que celui utilisé sur les véhicules à moteur thermique permet alors de ramener le couple sur les roues du véhicule à une valeur comparable à celui obtenu avec des moteurs électriques à couples de démarrages plus élevés, mais à transmission directe comme le montrent les figures 5 et 6 qui illustrent respectivement le couple moteur en fonction de la vitesse N du moteur électrique et le couple véhicule en fonction de sa vitesse V.

La courbe 5a correspond à un moteur à excitation série associé à un variateur de puissance (réduction de la tension d'induit). Il peut travailler en tout point du plan OABCD. A la courbe 5a correspond la courbe 6a sur la figure 6.

La courbe 5b correspond à un moteur à excitation séparée associé à un variateur de puissance, ce qui lui permet de travailler en tout point de lair OABE. Avec un variateur auxiliaire (réduction du flux), il peut travailler ensuite en tout point de l'aire EBFD. A la courbe 5b correspond la courbe 6b sur la figure 6.

La courbe 5c correspond à un moteur à excitation successives selon l'invention. La phase de lancement est représentée par l'aire OHGE. Dès que la vitesse du moteur atteint par exemple N/3, le variateur auxiliaire entre en fonctionnement et le moteur peut travailler sur l'aire EBFD.

Comme on le voit sur la figure 6, couple correspondant 6c la véhicule est comparable à celui obtenu avec un moteur à excitation séparée, depuis la vitesse nulle.

**Revendications**

1. Dispositif de démarrage et de contrôle de la vitesse d'un moteur électrique à courant continu, le contrôle de la vitesse étant obtenu après le démarrage au moyen d'un variateur (8) de faible puissance réglant la valeur du courant d'excitation dans un enroulement inducteur (7) en mode d'excitation séparé, caractérisé en ce que le moteur (1) démarre sous un faible couple en mode d'excitation série de l'enroulement inducteur (7) puis en ce que le circuit d'excitation est commuté automatiquement en mode séparé dès que la vitesse et la force contre-électromotrice du moteur atteignent des valeurs prédéterminées.

2. Dispositif selon la revendication 1, caractérisé en ce qu'il comprend une source (3) de courant continu alimentant un circuit composé de deux dérivations (4, 5); une première dérivation (4) comportant en série un premier contacteur (6), l'enroulement inducteur (7) et un hacheur de courant (8) et une seconde dérivation (5) comportant un second contacteur (9) en série avec l'enroulement induit (1) et, enfin, un élément unidirectionnel (10) dont le sens de conduction va de la ligne reliant l'inducteur (7) au hacheur (8) à la ligne reliant le second contacteur (9) à l'induit du moteur (1).

3. Dispositif selon la revendication 2, caractérisé en ce que la fermeture du premier contacteur (6) commande le démarrage du moteur par l'alimentation de l'inducteur (7) en série avec l'élément unidirectionnel (10) et l'induit (1).

4. Dispositif selon la revendication 2, caractérisé en ce que le hacheur de courant (8) entre en fonctionnement dès que la vitesse détectée du moteur atteint une valeur comprise entre le triers et la moitié de sa vitesse maximale et en ce qu'il contrôl ensuite, de façon connue en soi, la vitesse du moteur en réglant la valeur du courant d'excitation par la modification du rapport cyclique du hacheur.

5. Dispositif selon la revendication 2, caractérisé en ce que la fermeture du second contacteur (9), provoquée par un comparateur de tension lorsque la force contre-électromotrice aux bornes de l'induit (1) atteint la valeur de la tension d'alimentation (3), commute le circuit en mode d'excitation séparée en bloquant l'élément unidirectionnel (10).

6. Dispositif selon la revendication 2, caractérisé en ce que le premier contacteur est réalisé par un thyristor (12), le hacheur par un transistor (14) et l'élément unidirectionnel par un second thyristor (13) pouvant être désamorcé par une diode (15) branchée entre ce thyristor (13) et la ligne d'alimentation (4).

7. Dispositif selon la revendication 6, caractérisé en ce que des composants analogues (16, 17, 18, 19) sont reliés à la borne opposée de l'inducteur (7) en vue de faire circuler en sens inverse le courant d'excitation et d'assurer ainsi le fonctionnement du moteur sélectivement dans les deux sens de rotation.

8. Dispositif selon la revendication 1, caractérisé en ce que le moteur électrique est associé à un embrayage suivi d'une boîte de vitesses classiques pour une application à la traction électrique d'un véhicule automobile.

9. Dispositif selon les revendications 3 et 8, caractérisé en ce que la fermeture du premier contacteur (6) est provoquée par l'enfoncement de la pédale d'accélérateur du véhicule.

10. Dispositif selon la revendication 1, caractérisé en ce que le courant d'excitation peut varier entre deux valeurs extrêmes correspondant à la valeur maximale admissible du courant induit selon le fonctionnement en moteur ou en générateur et en ce qu'il est limité au moyen d'une boucle d'asservissement (11) modifiant le rapport cyclique du hacheur (8) en fonction de la valeur mesurée du courant induit par rapport à une valeur de consigne.

**Patentansprüche**

1. Einrichtung zur Anfahrts- und Geschwindigkeitsregelung eines elektrischen Gleichstrommotors, wobei die Regelung der Geschwindigkeit nach dem Anfahren mittels eines Unterbrechers (8) geringer Leistung erhalten wird, der die Grösse des Erregerstromes in einer Erregerwicklung (7) in getrenntem Erregungszustand einstellt, dadurch gekennzeichnet, dass der Motor (1) mit einem schwachen Moment anfährt, im Reihen-Erregungszustand der Erregerwicklung (7) und dass danach der Erregerstromkreis automatisch in den getrennten Erregungszustand umgeschaltet wird, sowie die Geschwindigkeit und die elektromotorische Gegenkraft des Motors vorgegebene Werte erreichen.

2. Einrichtung nach Anspruch 1, dadurch gekennzeichnet, dass sie eine Gleichstromquelle (3) aufweist, welche einen Stromkreis versorgt, der zwei Stromzweige (4, 5) aufweist; einen ersten Stromzweig (4), der in Reihe einen ersten Schalter (6), die Erregerwicklung (7) und einen Stromzerhacker (8) aufweist und einen zweiten Stromzweig (5), der einen zweiten Schalter (9) in Reihe mit der Ankerwicklung (1) aufweist und schliesslich ein gleichrichtendes Bauteil (10), dessen Stromdurchlassrichtung von der die Wicklung (7) mit dem Zerhacker verbindenden Leitung zu der Leitung verläuft, die den zweiten Schalter (9) mit dem Anker des Motors (1) verbindet.

3. Einrichtung nach Anspruch 2, dadurch gekennzeichnet, dass das Schliessen des ersten Schalters (6) das Anfahren des Motors steuert durch Stromversorgung der Wicklung (7) in Reihe mit dem gleichrichtenden Bauteil (10) und dem Anker (1).

4. Einrichtung nach Anspruch 2, dadurch gekennzeichnet, dass der Stromzerhacker (8) wirksam wird sowie die gemessene Geschwindigkeit des Motors einen Wert erreicht, der zwischen einem Drittel und der Hälfte der Maximalgeschwindigkeit liegt und dass er anschliessend in an sich bekannter Weise die Geschwindigkeit des Motors regelt durch Steuerung der Grösse des Erregerstromes durch Veränderung des zyklischen Verhältnisses des Zerhackers.

5. Einrichtung nach Anspruch 2, dadurch gekennzeichnet, dass das Schliessen des zweiten Schalters (9), das durch einen Spannungsvergleicher bewirkt wird, sofern die elektromotorische Gegenkraft an den Anschlüssen des Ankers (1) den Wert der Versorgungsspannung (3) erreicht, den Schaltkreis in den getrennten Erregungszustand umschaltet, wobei das gleichrichtende Bauteil (10) gesperrt ist.

6. Einrichtung nach Anspruch 2, dadurch gekennzeichnet, dass der erste Schalter aus einem Thyristor (12) besteht, dass der Zerhacker aus einem Transistor (14) besteht und dass das gleichrichtende Bauteil aus einem zweiten Thyristor (13) besteht, der durch eine Diode (15) gesperrt werden kann, der zwischen diesem Thyristor (13) und der Versorgungsleitung (4) geschaltet ist.

7. Einrichtung nach Anspruch 6, dadurch gekennzeichnet, dass analoge Bauteile (16, 17, 18, 19) an den entgegengesezten Anschlüssen des Erregers (7) angeschlossen sind um den Erregerstrom in entgegengesezter Richtung fliessen zu lassen und dergestalt den Motor wahlweise in beiden Drehrichtungen laufen zu lassen.

8. Einrichtung nach Anspruch 1, dadurch gekennzeichnet, dass der elektrische Motor einer Kupplung zugeordnet ist, die neben einem herkömmlichen Getriebe angeordnet ist zur Verwendung als elektrischer Antrieb eines Kraftfahrzeuges.

9. Einrichtung nach Ansprüchen 3 und 8, dadurch gekennzeichnet, dass das Schliessen des ersten Schalters (6) durch das Durchtreten des Gaspedals des Fahrzeuges erfolgt.

10. Einrichtung nach Anspruch 1, dadurch gekennzeichnet, dass der Erregerstrom zwischen zwei Extremwerten variieren kann entsprechend dem maximal zulässigen Wert des induzierten Stromes gemäss der Wirkungsweise als Motor oder als Generator und dass er mittels einer Regelschleife (11) begrenzt ist, die das zyklische Verhältnis des Zerhackers (8) als Funktion des gemessenen Wertes des induzierten Stromes bezüglich eines Schwellwertes verändert.

**Claims**

1. Apparatus for starting and controlling the speed of a direct current electric motor, speed control being produced after starting by means of a low-power varying means (8) for regulating the value of the excitation current in a field winding (7) in a separate excitation mode, characterised in that the motor (1) starts at a low torque level in a series excitation mode of the field winding (7), and then the excitation circuit is automatically switched into the separate mode as soon as the speed and the counter electromotive force of the motor reach predetermined values.

2. Apparatus according to claim 1, characterised in that it comprises a direct current source (3) supplying a circuit formed by two shunts (4, 5); a first shunt (4) comprising in series a first contactor switch (6), the field winding (7) and a current chopper (8) and a second shunt (5) comprising a second contactor switch (9) in series with the armature winding (1) and finally a unidirectional element (10), the direction of conduction of which is from the the line connecting the winding (7) to the chopper (8), to the line connecting the second contactor switch 9 to the armature of the motor (1).

3. Apparatus according to claim 2, characterised in that closure of the first contactor switch (6) causes starting of the motor by supplying power to the winding (7) in series with the unidirectional element (10) and the armature (1).

4. Apparatus according to claim 2, characterised in that the current chopper (8) comes into operation as soon as the detected speed of the motor reaches a value between a third and a half of its maximum speed and that it then controls the speed of the motor, in per se known manner, by regulating the value of the excitation current by modifying the duty factor of the chopper.

5. Apparatus according to claim 2, characterised in that closure of the second contactor switch (9) which is caused by a voltage comparator when the counter electromotiv force at the terminals of the armature (1) reaches the value of the supply voltage (3) switches the circuit into the separate excitation mode by putting the unidirectional element (10) into a non-conducting condition.

6. Apparatus according to claim 2, characterised in that the first contactor switch is formed by a thyristor (12), the chopper is formed by a transistor (14) and the unidirectional element is formed by a second thyristor (13) which can be switched off by a diode (15) connected betwen said thyristor (13) and the supply line (4).

7. Apparatus according to claim 6, characterised in that similar components (16, 17, 18, 19) are connected to the opposite terminal of the winding (7) to cause the excitation current to flow in the opposite direction and thus to provide for operation of the motor selectively in the two directions of rotation.

8. Apparatus according to claim 1, characterised in that the electric motor is associated with a clutch followed by a gear box which are conventional for application to the electrical traction of a motor vehicle.

9. Apparatus according to claims 3 and 8, characterised in that closure of the first contactor switch (6) is produced by the depression of the accelerator pedal of the vehicle.

10. Apparatus according to claim 1, characterised in that the excitation current can vary between two limit values corresponding to the maximum admissible value of the armature current, in dependence on operation as a motor or as a generator, and that it is limited by means of a control loop (11) for modifying the duty factor of the chopper (8) in dependence on the measured value of the armature current with respect to a reference value.

0046435

Fig.1

Fig.2

Fig.3

Fig.4

7

Fig.5

Fig.6